# EUROPEAN PATENT APPLICATION

(11) **EP 2 009 090 A1**
(43) Date of publication of application: **31.12.2008**
(21) Application number: 08475001.7
(22) Date of filing: 29.04.2008
(51) Int. Cl.: C12G 3/06

(54) **Mixed alcoholic beverage**

(30) Priority: 20.06.2007 SK 1012007 U
(71) Applicant: Trinom, a.s., 949 01 Nitra (SK)
(72) Inventor: Galambiovský, Igor, 949 01, Nitra (SK)
(74) Representative: Holoubkova, Maria

(57) **Abstract**

The subject of the techical solution is a mixed alcoholic beverage on the basis of fermented drinks which consists of a fermented drink in an amount of 50 to 99.97 volume percentage and peppermint leaves in an amount of 0.01 to 10.00 percent by volume and, if need be, lime juice and a sweetener in an amount of 0.01 to 10.00 and 0.01 to 30.00 volume percentage, respectively. Among fermented drinks are beverages made by fermenting fruit, honey and fermentable sugars and cereals. Peppermint can be in the fresh or dried form, as natural or natural identic flavouring, alcohol extract or artificial flavouring. Lime can be fresh, dried, as natural or natural identic flavouring or synthetic flavouring, and sugar, glucose, fructose or synthetic sweetening agents can be used as sweeteners.

As far as fermented drinks are concerned, different sorts of vine such as grapes and cider, mead or drinks made by the fermentation of sugar and cereals are an example of fermented drinks.

## Description

### Technical field

The technical solution concerns the food industry, especially the production of mixed alcoholic beverages.

### Hitherto state-of-the-art

Mixed alcoholic beverages containing different additives and having different flavours are known and popular; they are often prepared just before their consumation but manufactured mixed beverages are also known; however, mixed beverages combined with various sorts of fermented drinks are less frequent.

### Principle oftechnical solution

The mixed alcoholic beverage made out of fermented drinks according to this solution is distinguished from hitherto known beverages by combining unique properties of fermented drinks, especially vine, a herb called peppermint and with the benefit of lime.

The object of technical solution is a mixed alcoholic beverage on the basis of fermented drinks, which consists of a fermented drink in an amount of 50 to 99.97 volume percentage and peppermint leaves in an amount of 0.01 to 10.00 per cent by volume, and, if need be, 0.01- 10.00 volume percentage of lime juice ,and, if need be, 0.01 to 30.00 volume percentage of a sweetening agent Among fermented drinks are those made by fermentation of fruit, honey, and fermentable sugars and cereals. Peppermint can be in fresh or dried, as natural or natural identic flavouring, alcohol extract or synthetic flavouring. Lime can be fresh, dried, as natural or natural identic flavouring or synthetic flavouring and sugar, glucose, fructoses or synthetical sweetening agents can be used as a sweetener.
As far as fermented drinks are concerned, various sorts of vine such as grapes and cider, mead or drinks made by fermentation of sugar and cereals are an example.

### Examples of the implementation of technical solution

The following examples of the implementation illustrate the technical solution and impose no restriction on a range of application.

### Example 1

A mixed alcoholic beverage is prepared consisting of 99.00 volume percentage of vine and 1.00 per cent by volume of fresh peppermint.

### Example 2

A mixed alcoholic beverage consisting of 93.00 volume percentage of vine, 5.00 percent by volume of dried peppermint and 2.00 volume percentage of sugar is prepared.

### Example 3

A mixed alcoholic beverage is prepared consisting of 87.00 per cent by volume of vine, 2.00 volume percentage of peppermint as alcohol extract, 1.00 volume percentage of fresh lime and 10.0 volume percentage of sugar.

### Example 4

A mixed alcoholic beverage is prepared consisting of 60.00 volume percentage of cider, 5.00 percent by volume of peppermint as artificial flavouring, 5.00 volume percentage of dried lime and 30.00 percent by volume of sugar.

### Example 5

A mixed alcoholic beverage is prepared consisting of 75.00 volume percentage of mead, 10.00 volume percentage of fresh peppermint, 9.00 volume percentage of dried lime and 6.00 per cent by volume of glucose.

### Example 6

A mixed alcoholic beverage is prepared consisting of 80.00 volume percentage of fermented drink made of cereals, 4.00 percent by volume of peppermint as natural flavouring,7.00 volume percentage of lime as synthetic flavouring and 9.00 volume percentage of synthetic sweetening agent..

### Industrial applicability

The subject of the technical solution is intended for use in the food industry, the catering industry, restaurants, etc.

## Claims

1. Mixed alcoholic beverage based on fermented drinks **characterized in that** it contains the fermented drink in an amount of 50 to 99.99 volume percentage and peppermint leaves amounting to 0.01 to 10.00 percent by volume.

2. Mixed alcoholic beverage based on fermented drinks according to claim 1, **characterized in that** it contains the fermented drink in an amount of 50 to 99.98 volume percentage, peppermint ranging from 0.01 to 10.00 percent by volume plus lime juice in an amount of 0.01 to 10.00 volume percentage.

3. Mixed alcoholic beverage based on fermented drinks according to claim 1, **characterized in that** it contains the fermented drink in an amount of 50 to 99.97 volume percentage, peppermint varying from 0.01 to 10.00 volume percentage plus lime juice in an amount of 0.01 to 10.00 percent by volume and the sweetening agent amounting to 0.01 to 30.00 volume percentage.

4. Mixed alcoholic beverage based on fermented drinks according to claims 1 to 3, **characterised in that** the fermented drinks are the drinks made by the fermentation of fruit, honey, and fermentable sugars and cereals.

5. Mixed alcoholic beverage based on fermented drinks according to claims 1 to 3, **characterized in that** peppermint is fresh or dried, as natural or natural identic flavouring, alcohol extract or syntethic flavouring.

6. Mixed alcoholic beverage based on fermented drinks according to claims 2 to 3, **characterized in that** lime is fresh, dried, natural, natural identic or synthetic flavouring.

7. Mixed alcoholic beverage based on fermented drinks according to claims 3, **characterized in that** the sweetening agent is sugar, glucose, fructose or synthetic sweetening agents.
